(19) Europäisches Patentamt
European Patent Office
Office européen des brevets

(11) **EP 4 424 564 A1**

(12) **EUROPEAN PATENT APPLICATION**
published in accordance with Art. 153(4) EPC

(43) Date of publication:
04.09.2024 Bulletin 2024/36

(51) International Patent Classification (IPC):
*B60W 20/13* (2016.01)    *B60W 30/184* (2012.01)
*B60W 30/188* (2012.01)    *B60W 50/00* (2006.01)

(21) Application number: 22887650.4

(22) Date of filing: 27.10.2022

(52) Cooperative Patent Classification (CPC):
**B60W 20/13; B60W 30/184; B60W 30/188;
B60W 50/00**

(86) International application number:
**PCT/KR2022/016588**

(87) International publication number:
**WO 2023/075455 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.10.2021 KR 20210144773

(71) Applicant: **Korea Advanced Institute of Science
and Technology
Daejeon 34141 (KR)**

(72) Inventors:
• **KIM, Kyung-Soo
Daejeon 34141 (KR)**
• **CHOI, Kyung-Hwan
Daejeon 34051 (KR)**
• **JANG, In-Gwun
Daejeon 34051 (KR)**

(74) Representative: **Michalski Hüttermann & Partner
Patentanwälte mbB
Kaistraße 16A
40221 Düsseldorf (DE)**

(54) **METHOD AND DEVICE FOR CONTROLLING POWER THROUGH CONSIDERATION OF
TRANSIENT CHARACTERISTICS OF HYBRID VEHICLE**

(57) The present invention relates to a power control method and apparatus for considering transient characteristics of a hybrid vehicle, and more particularly to a power control method and apparatus for maximizing performance in an actual operating environment of a hybrid vehicle by reducing fuel power supply transients.

The present invention provides a method and apparatus for effectively solving an optimal power control problem without a fuel source transient model to reduce fuel source transients and maximize the performance of a hybrid vehicle in an actual operating environment.

EP 4 424 564 A1

FIG. 7

**EP 4 424 564 A1**

**Description**

**BACKGROUND OF THE INVENTION**

[Technical Field]

The present invention relates to a power control method and apparatus that considers the transient characteristics of a hybrid vehicle, and more specifically, to a power control method and apparatus that maximizes the performance of a hybrid vehicle in an actual operating environment by reducing fuel power source transients.

[Background Description]

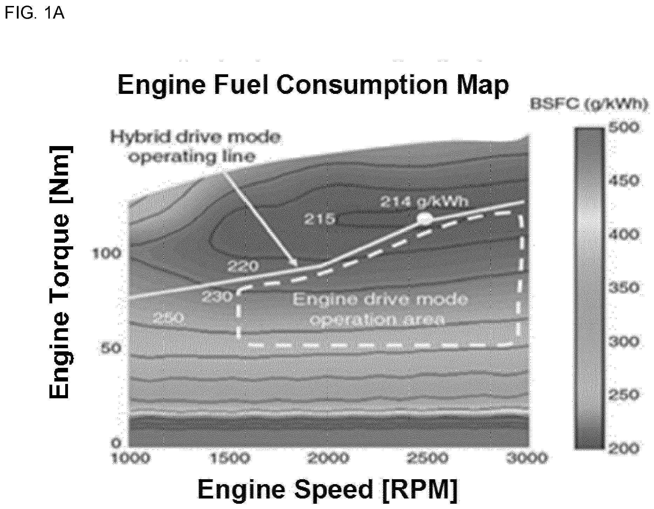

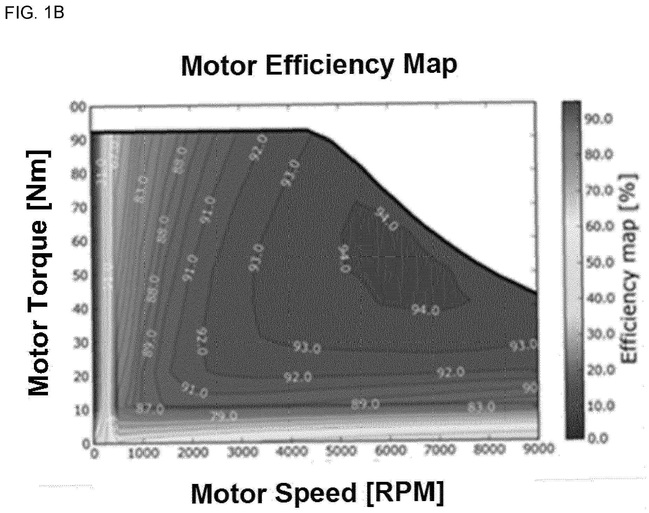

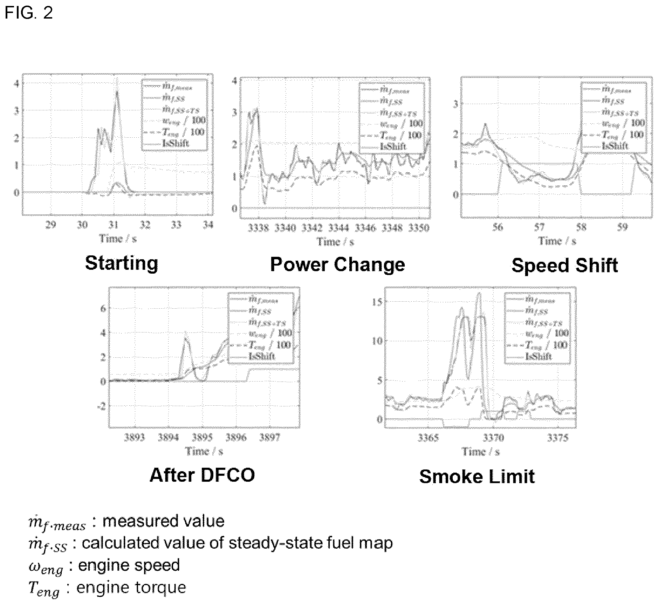

FIG. 1A is a diagram illustrating an engine fuel consumption map in a hybrid vehicle in a steady state, FIG. 1B is a diagram illustrating a motor efficiency map in a hybrid vehicle in a steady state, and FIG. 2 is a diagram illustrating a fuel consumption characteristic in a transient state when the fuel source is an engine.

Referring to FIGS. 1A and 1B, it can be seen that the fuel power source consumes less fuel per energy at medium to high power range, and the motor is efficient throughout the driving range. In particular, referring to FIG. 2, it can be seen that the fuel power source has different fuel consumption characteristics in the transient state than in the steady state. That is, there is a large difference in fuel consumption amount between the measured value ($\dot{m}_{f\,meas}$) and the calculated value of the steady-state fuel map ($\dot{m}_{fSS}$) during transients such as starting and power changes. Considering these results, to maximize the performance and efficiency of hybrid vehicles, such as reducing fuel consumption, a power control strategy is needed to solve transient state problems by taking into account the efficiency characteristics of the two power sources.

Patent Literature

(Patent Reference 1) KR 10-1766092 B1
(Patent Reference 2) US 2011-0166730 A1
(Patent Reference 3) US 8473133 B2
(Patent Reference 4) KR 10-1634489 B1

Detailed Description of the Invention

[Technical Problems]

The present invention was devised to solve these problems. Its purpose is to provide a method and apparatus that can effectively solve the optimal power control problem without a transient state model of the fuel power source, thereby reducing the transient operation of the fuel power source and maximizing the performance of hybrid vehicles in real-world driving conditions.

[Technical Solution]

To achieve this object, there is provided a power control method considering the transient characteristics of a hybrid vehicle, comprising: (a) receiving a current requested power value from the hybrid vehicle; (b) calculating an average requested power from the received plurality of requested power values; (c) calculating an optimal fuel power output command value that minimizes an average equivalent fuel consumption for the average requested power; (d) calculating a battery-based power command from the optimal fuel power output command calculated in step (c) and the requested power value; and (e) transmitting the optimal fuel power output command and the battery-based power command to a control system of the hybrid vehicle.

Preferably, the average equivalent fuel consumption is defined as a weighted sum of average fuel consumption and average battery power expressed as

$$\overline{m}_{eq}(P_f, P) = \overline{m}_f(P_f) + \lambda \overline{P}_b(P_f, P)$$

3

where $\lambda$ is the equivalence factor.

The power control method may further comprise between step (c) and step (d), a step of: (c1) determining the fuel power output command as an allowable minimum value of the fuel power output if the fuel power output command value calculated in step (c) is less than or equal to the allowable minimum value of the fuel power output, determining the fuel power output command as an allowable maximum value of the fuel power output if the calculated fuel power output command value is greater than or equal to the allowable maximum value of the fuel power output, and determining the fuel power output command as the calculated fuel power output command value if the calculated fuel power output command value is between the allowable maximum value and the allowable minimum value of the fuel power output.

Preferably, when the hybrid vehicle uses an engine-electric hybrid powertrain, the instantaneous fuel amount model equation is

$$\dot{m}_f(w_f, P_f) = q_0(w_f) + q_1(w_f)P_f + q_2(w_f)P_f^2$$

and the battery power model equation is

$$P_b(w_m, P_f, P) = r_0(w_m) + r_1(w_m)(P - P_f) + r_2(w_m)(P - P_f)^2$$

where the motor power ($P_m$) is determined by the difference between the requested power ($P$) and the fuel power output ($P_f$), $w_m$ is the motor speed, $w_f$ is the engine speed, $q_0, q_1, q_2$ are each a function of $w_f$, and $r_0, r_1, r_2$ are each a function of $w_m$.

Preferably, the optimal fuel power output command is determined as

$$P_f^* = \frac{\lambda(\overline{r_1} + 2\overline{r_2}P) - \overline{q_1}}{2(\lambda\overline{r_2} + \overline{q_2})}$$

.

Preferably, when the hybrid vehicle uses an engine-electric hybrid powertrain, the battery-based power command calculated in step (d) is a motor power command.

Preferably, when the hybrid vehicle uses a fuel cell-electric hybrid powertrain, the instantaneous fuel amount model equation is

$$\dot{m}_f(P_f) = s_0 + s_1 P_f + s_2 P_f^2$$

and the battery power model equation is

$$P_b(P_f, P) = l_0 + l_1(P - P_f) + l_2(P - P_f)^2$$

.

Preferably, the optimal fuel power output command is determined as

$$P_f^* = \frac{\lambda(t_1 + 2t_2\overline{P}) - s_1}{2(\lambda t_2 + s_2)}$$

.

Preferably, when the hybrid vehicle uses a fuel cell-electric hybrid powertrain, the battery-based power command calculated in step (d) is a battery power command. According to other aspect of the present invention, there is provided an apparatus for performing power control considering the transient characteristics of a hybrid vehicle, comprising: at least one processor; and at least one memory storing computer-executable instructions, wherein the computer-executable instructions stored in the at least one memory cause the at least one processor to perform: (a) receiving a current requested power value from the hybrid vehicle; (b) calculating an average requested power from the received plurality of requested power values; (c) calculating an optimal fuel power output command value that minimizes an average equivalent fuel consumption for the average requested power; (d) calculating a battery-based power command from the optimal fuel power output command calculated in step (c) and the requested power value; and (e) transmitting the optimal fuel power output command and the battery-based power command to a control system of the hybrid vehicle. According to another aspect of the present invention, there is provided a computer program for performing power control considering the transient characteristics of a hybrid vehicle, stored on a non-transitory storage medium, and comprising instructions that cause a processor to perform: (a) receiving a current requested power value from the hybrid vehicle; (b) calculating an average requested power from the received plurality of requested power values; (c) calculating an optimal fuel power output command value that minimizes an average equivalent fuel consumption for the average requested power; (d) calculating a battery-based power command from the optimal fuel power output command calculated in step (c) and the requested power value; and (e) transmitting the optimal fuel power output command and the battery-based power command to a control system of the hybrid vehicle.

According to still another aspect of the present invention, there is provided an apparatus for power control considering the transient characteristics of a hybrid vehicle, comprising: an average requested power calculation unit that calculates an average requested power for the requested power value continuously received from a control unit of the hybrid vehicle; a fuel power output calculation unit that calculates an optimal fuel power output command value that minimizes an average equivalent fuel consumption for the average requested power value; a battery-based power calculation unit that calculates a battery-based power from the requested power value and the optimal fuel power output; and a communication unit that continuously receives the requested power value from the control unit of the hybrid vehicle and transmits the optimal fuel power output command and the battery-based power command to the control system of the hybrid vehicle.

Preferably, the average equivalent fuel consumption is defined as a weighted sum of average fuel consumption and average battery power expressed as

$$\bar{m}_{eq}(P_f, P) = \bar{m}_f(P_f) + \lambda \bar{P}_b(P_f, P)$$

where $\lambda$ is the equivalence factor.

Preferably, the fuel power output calculation unit further includes a function of: determining the fuel power output command as an allowable minimum value of the fuel power output if the calculated fuel power output command value is less than or equal to the allowable minimum value of the fuel power output, determining the fuel power output command as an allowable maximum value of the fuel power output if the calculated fuel power output command value is greater than or equal to the allowable maximum value of the fuel power output, and determining the fuel power output command as the calculated fuel power output command value if the calculated fuel power output command value is between the allowable maximum value and the allowable minimum value of the fuel power output.

Preferably, when the hybrid vehicle uses an engine-electric hybrid powertrain, the instantaneous fuel amount model equation is

$$\dot{m}_f(w_f, P_f) = q_0(w_f) + q_1(w_f)P_f + q_2(w_f)P_f^2$$

and the battery power model equation is

$$P_b(w_m, P_f, P) = r_0(w_m) + r_1(w_m)(P - P_f) + r_2(w_m)(P - P_f)^2$$

where the motor power ($P_m$) is determined by the difference between the requested power (P) and the fuel power output ($P_f$), $w_m$ is the motor speed, $w_f$ is the engine speed, $q_0, q_1, q_2$ are each a function of $w_f$, and $r_0, r_1, r_2$ are each a function of $w_m$.

Preferably, the optimal fuel power output command is determined as

$$P_f^* = \frac{\lambda(\overline{r_1} + 2\overline{r_2 P}) - \overline{q_1}}{2(\lambda \overline{r_2} + \overline{q_2})}.$$

Preferably, when the hybrid vehicle uses an engine-electric hybrid powertrain, the battery-based power command calculated by the battery-based power calculation unit is a motor power command.

Preferably, when the hybrid vehicle uses a fuel cell-electric hybrid powertrain, the instantaneous fuel amount model equation is

$$\dot{m}_f(P_f) = s_0 + s_1 P_f + s_2 P_f^2$$

and the battery power model equation is

$$P_b(P_f, P) = t_0 + t_1(P - P_f) + t_2(P - P_f)^2.$$

Preferably, the optimal fuel power output command is determined as

$$P_f^* = \frac{\lambda(t_1 + 2t_2 \overline{P}) - s_1}{2(\lambda t_2 + s_2)}.$$

Preferably, when the hybrid vehicle uses a fuel cell-electric hybrid powertrain, the battery-based power command calculated by the battery-based power calculation unit is a battery power command.

[Effect of the invention]

According to the present invention, there is an effect of providing a method and apparatus that can effectively solve the optimal power control problem without a transient state model of the fuel power source, thereby reducing the transient operation of the fuel power source and maximizing the performance of hybrid vehicles in real-world driving conditions.

[Brief Description of the Drawings]

FIG. 1A is a diagram showing an engine fuel consumption map in a hybrid vehicle at a steady state.
FIG. 1B is a diagram illustrating a motor efficiency map in a hybrid vehicle at a steady state.
FIG. 2 is a diagram depicting a fuel consumption characteristic in a transient state when the fuel power source is an engine.
FIG. 3A shows an embodiment of the powertrain configuration of a hybrid vehicle, an example of using an engine as a fuel-based power conversion device (a parallel engine-electric hybrid powertrain).
FIG. 3B shows another embodiment of the powertrain configuration of a hybrid vehicle, an example of using a fuel cell as a fuel-based power conversion device (a fuel cell-electric hybrid powertrain).
FIG. 4 is a diagram showing the measurement results of fuel consumption according to the power control strategy of a hybrid vehicle.
FIG. 5 is a diagram illustrating an example of modeling results of instantaneous fuel consumption in a transient state when the fuel power source is an engine.

FIG. 6 is a diagram illustrating an embodiment of a conventional control device configuration for an engine-electric hybrid vehicle.

FIG. 7 is a diagram illustrating a control device configuration according to the present invention for an engine-electric hybrid vehicle.

FIG. 8 is a flowchart of a method for performing power control considering the transient characteristics of a hybrid vehicle according to the present invention.

FIG. 9 is a diagram for comparing the certified driving cycle and the real driving environment of a commercial vehicle.

FIG. 10 is a diagram showing the actual fuel efficiency and performance according to the driving environment of the present invention's control method, compared with the results of the conventional algorithm.

FIG. 11 is a diagram showing the simulation results of engine torque and instantaneous fuel consumption of an engine-electric hybrid vehicle applying the control method of the present invention.

FIG. 12 is a diagram showing the simulation results of fuel efficiency and carbon emissions of an engine-electric hybrid vehicle applying the control method of the present invention.

[Best Mode for Carrying Out the Invention]

Hereinafter, preferred embodiments of the present invention will be described in detail with reference to the accompanying drawings. Prior to that, the terms or words used in this specification and claims should not be construed as being limited to their common or dictionary meanings, and the inventor can appropriately define the concepts of terms based on the principle that terms can be properly defined to describe his/her own invention in the best way. Therefore, the embodiments described in this specification and the configurations shown in the drawings are merely the most preferred embodiments of the present invention, and do not represent all the technical ideas of the present invention. Thus, it should be understood that there may be various equivalents and modifications that can replace them at the time of this application.

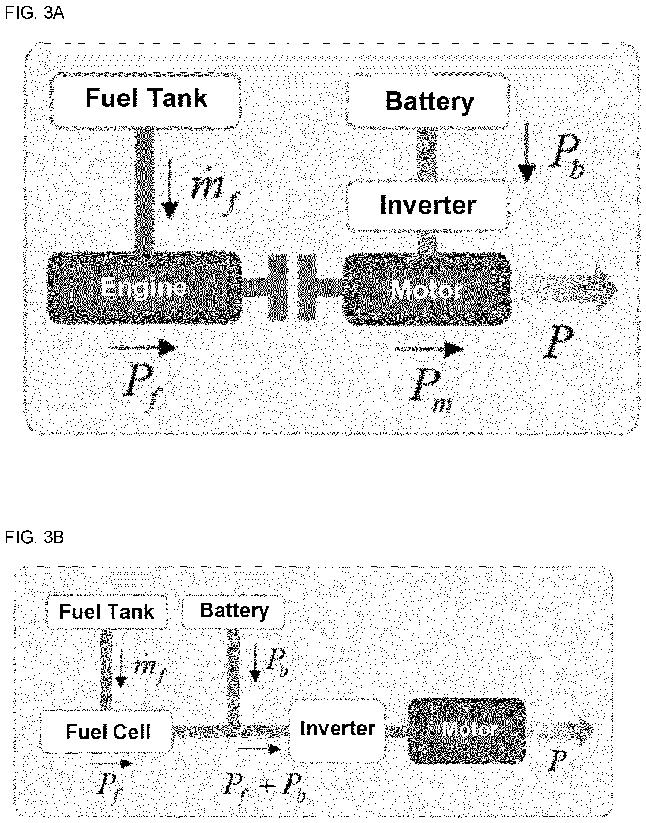

FIGS. 3A and 3B illustrate exemplary configurations of a powertrain in a hybrid vehicle.

A hybrid vehicle refers to a vehicle that uses two or more power sources, and generally uses two power sources of fuel and battery. FIG. 3A illustrates an example of using an engine as a fuel-based power conversion device (a parallel engine-electric hybrid powertrain), and FIG. 3B illustrates an example of using a fuel cell as a fuel-based power conversion device (a fuel cell-electric hybrid powertrain). The instantaneous fuel consumption ($\dot{m}_f$) is converted to mechanical power or electrical power ($P_f$) through the fuel power source, which is an engine (FIG. 3A) or a fuel cell (FIG. 3B). The power ($P_f$) from this fuel power source is combined with the power generated from the battery to provide the power requested by the driver ($P$).

In the case of a parallel engine-electric hybrid powertrain (FIG. 3A), the battery power ($P_b$) is converted to mechanical power ($P_m$) through the motor and then combined with $P_f$ to provide the requested power (P). In the case of a fuel cell-electric hybrid powertrain (FIG. 3B), the battery power ($P_b$) is combined with $P_f$ to provide the requested power ($P$).

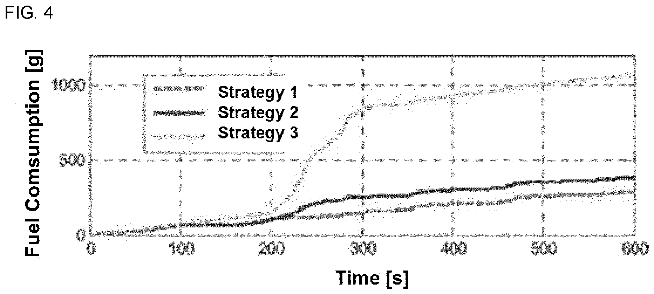

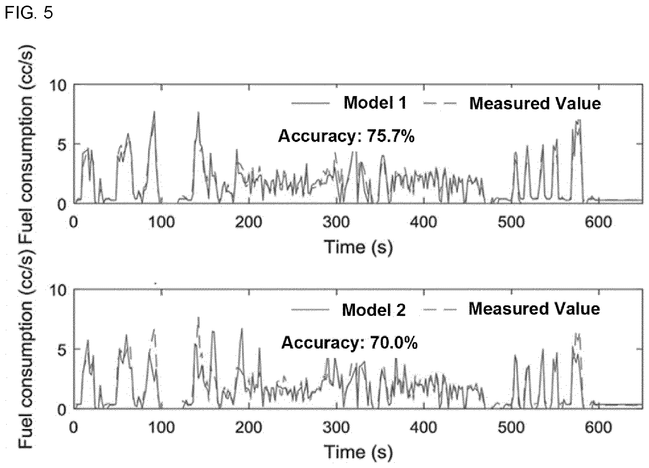

FIG. 4 illustrates measurement results of fuel consumption according to power control strategies of a hybrid vehicle, and FIG. 5 illustrates an example of modeling results of instantaneous fuel consumption in a transient state when the fuel power source is an engine.

When a driving environment is given, the requested power ($P$) required to reach a defined speed at each time point is determined, and this power needs to be generated from two power sources (fuel and battery). The optimal power control problem can be defined as a problem of minimizing the equivalent fuel consumption ($\dot{m}_{eq}$), which is the weighted sum of the instantaneous fuel consumption ($\dot{m}_f$) and battery power ($P_b$), as follows:

[Expression 1]

$$\dot{m}_{eq,k}(P_f,P) = \dot{m}_f(P_f) + \lambda P_b(P_f,P), \quad (1a)$$

$$P_{f,k}^* = \arg\min_{P_f \in \mathbf{P}} \dot{m}_{eq,k}(P_f,P), \quad (1b)$$

where k is a time step, $\lambda$ is an equivalence factor, $P_f$ is the fuel power output, $P$ is a set of allowable fuel power outputs ($P_f$) considering the operating range of the fuel power source and motor.

$P_b$ is automatically determined when $P_f$ is determined for a given $P$, so it is a function of $P$ and $P_f$. $P_f$ corresponds to a control input, and $P_{f,k}^*$ is the optimal control input command determined in the optimal power control problem. The usage of power sources ($\dot{m}_f$, $P_b$) is determined by this control input command, and in the case of a parallel engine-electric hybrid powertrain, the motor power ($P_m$) is also determined.

To solve the optimal power control equation of Expression 1, models for fuel consumption ($\dot{m}_f$) and battery power ($P_b$) are needed. Since the requested power ($P$) changes over time, the fuel power output command ($P_{f,k}^*$) also changes accordingly, which inevitably causes transient operation of the fuel power source.

Generally, power control is performed based on a steady-state model, but when power control is performed considering the transient state model of the fuel power source, significant efficiency improvement is required, especially in terms of fuel consumption reduction, as shown in FIG. 4.

Strategy 1: Applying steady-state and transient models of the fuel power source (engine) (total fuel consumption 270 g)

Strategy 2: Applying steady-state model of the fuel power source (engine) (total fuel consumption 390 g)

However, the $\dot{m}_f$ model at the transient state of the fuel power source has high complexity, making it difficult to ensure accuracy above 80% even with a complex function as shown in FIG. 5. Due to this, there are limitations in the actual implementation of power control technology that reflects the transient state model of the fuel power source. Therefore, a power control technology that can reduce the transient operation of the fuel power source even without the transient state model is needed, and such technology can achieve maximization of performance (minimization of carbon emissions) in the actual operating environment of hybrid vehicles.

Various technologies have been disclosed to solve this transient state problem.

Patent Reference 1 proposes a method of reducing additional fuel consumption occurring in transient operation by controlling the engine torque through a fast path only under conditions requiring a fast response and controlling the engine torque through a slow path under other conditions.

Patent Reference 2 proposes a method of limiting the transient operation of the engine by limiting the rate of change of engine torque and engine power.

Patent Reference 3 proposes a method of pre-defining an engine torque range with high efficiency (torque band lower limit ~ upper limit) and operating the engine only within this range in a limited manner.

These methods can reduce the transient operation of the engine itself, but since the efficiency characteristics of the motor are not considered together, there is a limitation in optimizing the efficiency of the entire hybrid system.

Patent Reference 4 performs power control by additionally reflecting a fuel consumption model caused by the engine turbocharger.

In another paper, power control is performed by additionally reflecting fuel consumption models caused by engine start and smoke limit.

With these methods, it is possible to improve the efficiency of the hybrid system through the reduction of the transient operation of the engine (turbocharging, starting, smoke limit, etc.), which is the target of modeling. However, as shown in the example of FIG. 2, the engine has various types of transient operation, and as shown in the example of FIG. 5, there is a limitation in the accuracy of the transient state model of the engine. Therefore, it lacks some practicality to become a general power control method, and although it can reduce the transient operation of the engine itself, since the efficiency characteristics of the motor are not considered together, there is a limitation in optimizing the efficiency of the entire hybrid system.

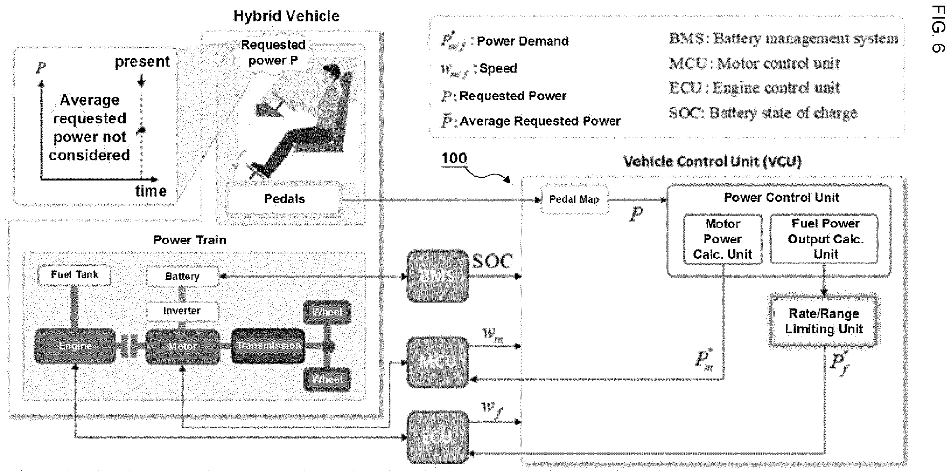

FIG. 6 illustrates an example of a configuration of a conventional control device (100) for an engine-electric hybrid vehicle.

The control device in FIG. 6 applies a rate or range limitation to the fuel power output (or torque) determined in the power control unit. In this method, since the efficiency characteristics of the motor are not considered together in the reduction of the transient operation of the fuel power source, there is a problem that optimal system performance cannot be derived.

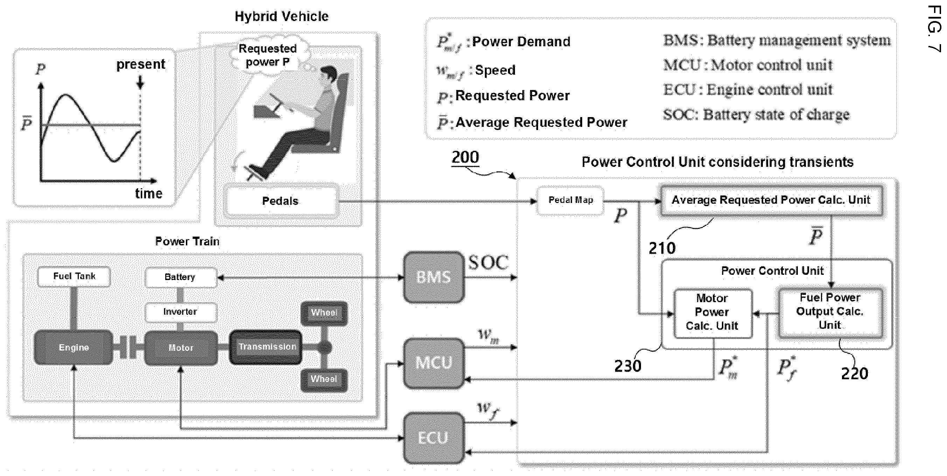

FIG. 7 illustrates a configuration of a control device (200) for a hybrid vehicle considering transient characteristics according to the present invention.

The core of the present invention lies in that the average value ($\bar{P}$) of the driver's requested power ($P$) for a specific time domain is calculated by the average requested power calculation unit (210), and the fuel power output command ($P_f^*$) is determined by the fuel power output calculation unit (220) of the power control unit for this average requested power ($\bar{P}$). The driver's requested power ($P$) is continuously received by the communication unit (not shown) of the control device (200) for a hybrid vehicle considering transient characteristics from the control device of the hybrid vehicle, and the average requested power calculation unit calculates the average requested power $\overline{P}$ from this.

The fuel power output command ( $P_f^*$ ) determined in this way means a single value that minimizes the equivalent fuel consumption for a specific time domain, and $P_f^*$ changes very slowly according to $\overline{P}$, so it has an advantage of being able to greatly reduce the transient operation of the fuel power source.

[Expression 2]

$$\overline{\overline{m}}_{eq}(P_f,P) = \overline{\overline{m}}_f(P_f) + \lambda \overline{\overline{P}}_b(P_f,P), \quad (2a)$$

$$P_f^* = \arg\min_{P_f \in \mathbf{P}} \overline{\overline{m}}_{eq}(P_f,P), \quad (2b)$$

In Expression 2, when x is an arbitrary variable,
[Expression 3]

$$\overline{x} = \frac{1}{N}\sum_{i=0}^{N-1} x_{k-i}, \quad (3)$$

means the average value of x, and N means the number of time steps of the target time domain.

The present invention determines the optimal fuel power output command ( $P_f^*$ ) (Equation (2b)) that minimizes $\overline{m}_{eq}$ shown in Equation (2a) of Expression 2, which is the average equivalent fuel consumption for a specific time domain. The fuel power output command $P_f^*$ to be determined becomes a function of the average requested power $\overline{P}$ since the average calculation is applied to the variable P.

$\overline{P}$ changes very slowly for a sufficiently large N and $P_f^*$ changes very slowly according to $\overline{P}$, so it has the advantage of being able to greatly reduce the transient operation of the fuel power source.
Patent References 1, 2, and 3, as described in FIG. 6, apply a rate or range limitation to the fuel power output (or torque) determined in the power control unit. In these methods, since the efficiency characteristics of the motor are not considered together in the reduction of the transient operation of the fuel power source, optimal system performance cannot be derived.
On the other hand, in the present invention, the optimal power control result considering the motor efficiency characteristics is derived from Expression 2, and in the extreme case where the average requested power ($\overline{P}$) is constant in the driving environment, a static (fixed) fuel power output value can be derived. This means that system performance optimization and reduction of transient operation of the fuel power source are performed simultaneously.
In addition, Patent Reference 2 and other previous studies were based on the optimal power control problem, but did not secure generality due to the limited application of the transient state model of the fuel power source.
On the other hand, the present invention can simultaneously perform system performance optimization and reduction of transient operation of the fuel power source by determining and applying the fuel power output command $P_f^*$ using Expression 2 even without such a transient state model of the fuel power source.

The battery-based power command can be calculated from the determined $P_f^*$ and $\overline{P}$ by a battery-based power calculation unit (230). Here, as described above, the battery-based power is the power directly derived from the battery. That is, as described above, the power control method of the present invention and the device performing the method determine the fuel power output command $P_f^*$ using Expression 2, and determine the battery-based power according to the requested power from that.

Meanwhile, although the powertrain shown in FIG. 7 illustrates the engine-electric hybrid powertrain of FIG. 3A, the power control method described above is also applicable when the fuel cell-electric hybrid powertrain of FIG. 3B is used as the powertrain. Furthermore, the power control method of the present invention and the device performing the method are not only applicable to the parallel engine-electric hybrid powertrain described in FIG. 3A, but also to engine-electric hybrid powertrains with other topologies (plug-in, power split, series, etc.), and can be extensively applied to general hybrid vehicles including the fuel cell-electric hybrid vehicle of FIG. 3B.

Furthermore, it can also be utilized as a power control method for other hybrid systems using two or more power sources.

However, in FIG. 7, when using a fuel cell-electric hybrid powertrain, the motor speed signal $w_m$ and engine (fuel power source) speed signal $w_f$ are not included. In addition, the battery-based power is $P_b$ of Expression 2 in the case of the fuel cell-electric hybrid powertrain of FIG. 3B, and is the motor power $P_m$ determined from $P_b$, as shown in FIG. 7, in the case of the engine-electric hybrid powertrain of FIG. 3A.

Hereinafter, first, an example in which the power control method of the present invention considering transient characteristics is applied to the engine-electric hybrid powertrain of FIG. 3A will be described in detail, and then an example in which the power control method of the present invention considering transient characteristics is applied to the fuel cell-electric hybrid powertrain of FIG. 3B will be described in detail.

1) Embodiment of applying the power control method of the present invention considering transient characteristics to the engine-electric hybrid powertrain of FIG. 3A

The steady-state models of instantaneous fuel consumption ($\dot{m}_f$) and battery power ($P_b$) can be assumed to be modeled in the following form:

[Expression 4]

$$\dot{m}_f(w_f, P_f) = q_0(w_f) + q_1(w_f)P_f + q_2(w_f)P_f^2, \quad (4a)$$

$$P_b(w_m, P_m) = r_0(w_m) + r_1(w_m)P_m + r_2(w_m)P_m^2, \quad (4b)$$

$$P_b(w_m, P_f, P) = r_0(w_m) + r_1(w_m)(P - P_f) + r_2(w_m)(P - P_f)^2. \quad (4c)$$

In the engine-electric hybrid powertrain of FIG. 3A, the battery-based power refers to the motor power ($P_m$), and the motor power ($P_m$) is determined by the difference between the requested power ($P$) and the fuel power output ($P_f$), so can be expressed as Equation 4c.

The functional relationships of the coefficients q0, q1, q2, r0, r1, r2 in Expression 4 with respect to speed ($w_f$, $w_m$) can be derived through the characteristic values of the fuel power source, motor, and battery, respectively, or derived through experimental data.

By substituting Equations 4a and 4c into Equation 2a and then calculating $\partial \bar{m}_{eq} / \partial P_f$ for $P_f^* = \mathrm{argmin}\, \bar{m}_{eq}(P_f)$ in Equation 2b according to the optimization principle, [Expression 5] is obtained.

[Expression 5]

$$P_f^* = \frac{\lambda(\overline{r_1} + 2\overline{r_2 P}) - \overline{q_1}}{2(\lambda \overline{r_2} + \overline{q_2})}. \qquad (5)$$

This solution is expressed as a function of the average requested power ($\overline{P}$) as described above, and also includes the average values of the coefficients of the $\dot{m}_f$ and $P_b$ model, that is, $\overline{r_1}, \overline{r_2}, \overline{q_1}, \overline{q_2}$ in the example of the engine-electric hybrid powertrain. In other words, the coefficients $r_1$, $r_2$, $q_1$, $q_2$ are functions of the engine (fuel power source) speed $w_f$ or motor speed $w_m$, respectively, as shown in the above equation, so they change over time, and accordingly, their average values are also applied as shown in Expression 5.

If N used in the average calculation is very large or the change in the driving environment is not significant, these average values are calculated almost constantly, and this solution ($P_f^*$) also has an almost constant value. In this case, it is a very desirable characteristic in terms of power control that the result of optimizing the performance of the hybrid system minimizes the transient operation of the fuel power source.

If the fuel power output command ($P_f^*$) determined by Expression 5 is determined outside the allowable set ($P$) of the fuel power output, that is, if $P_f^*$ is less than or equal to the allowable minimum value ($P_f^{min}$) of the fuel power output or greater than or equal to the allowable maximum value ($P_f^{max}$), the $P_f^*$ can be limited as shown in Expression 6.

[Expression 6]

$$P_f^* = \begin{cases} P_f^{min} & (P_f^* \leq P_f^{min}) \\ P_f^* & (P_f^{min} < P_f^* < P_f^{max}) \\ P_f^{max} & (P_f^* \geq P_f^{max}) \end{cases} \qquad (6)$$

This method is different from limiting the rate of change or range of the fuel power output (torque) in Patent References 1, 2, and 3, but rather limits it within the range where the fuel power source can actually output power, so it is not related to the reduction of transient operation.

2) Embodiment of applying the power control method of the present invention considering transient characteristics to the fuel cell-electric hybrid powertrain of FIG. 3B

The steady-state models of instantaneous fuel consumption ($\dot{m}_f$) and battery power ($P_b$) can be assumed to be modeled in the following form:

[Expression 7]

$$\dot{m}_f(P_f) = s_0 + s_1 P_f + s_2 P_f^2, \qquad (7a)$$

$$P_b(P_f, P) = t_0 + t_1(P - P_f) + t_2(P - P_f)^2. \qquad (7b)$$

By substituting Equations 7a and 7b into Equation 2a and then calculating $\partial \overline{\dot{m}}_{eq} / \partial P_f = 0$ for

$$P_f^* = \mathrm{argmin}\,\overline{\dot{m}}_{eq}(P_f)$$

in Equation 2b according to the optimization principle, [Expression 8] is obtained.

[Expression 8]

$$P_f^* = \frac{\lambda(t_1 + 2t_2\overline{P}) - s_1}{2(\lambda t_2 + s_2)}. \qquad (8)$$

The coefficients $r_1$, $r_2$, $q_1$, $q_2$ applied in Equations 4a and 4c of the engine-electric hybrid powertrain are functions of the engine (fuel power source) speed $w_f$ or motor speed $w_m$, respectively, so they change over time, and accordingly, their average values are also applied as shown in Expression 5.

However, in the fuel cell-electric powertrain, there are no $w_f$ and $w_m$, and therefore, the coefficients $s_0$, $s_1$, $s_2$, $t_0$, $t_1$, $t_2$ applied in Equations 7a and 7b are constants that do not change over time, so there is no need to apply average values to those coefficients. However, even if the average values are applied to each constant coefficient, the result is the same value, so it can be seen that the fuel power output equation of Expression 5 applied to the engine-electric hybrid powertrain and the fuel power output equation of Expression 8 applied to the fuel cell-electric powertrain have the same form.

The coefficients $s_0$, $s_1$, $s_2$, $t_0$, $t_1$, $t_2$ in Expression 7 can be derived through the characteristic values of the fuel power source and battery, respectively, or derived through experimental data.

Expression 6, which limits the range of the fuel power output command ( $P_f^*$ ) determined by Expression 5 in the engine-electric hybrid powertrain, is also applied identically to the fuel power output command ( $P_f^*$ ) determined by Expression 8 in the fuel cell-electric powertrain.

Finally, the battery-based power command is calculated. This battery-based power command is the motor power command ( $P_m^*$ ) in the engine-electric hybrid powertrain of FIG. 3A.

The motor power command is calculated as $P_m^* = P - P_f^*$ and applied to the control. In addition, as described above, the battery-based power command is the battery power command ( $P_b^*$ ) in the fuel cell-electric hybrid powertrain of FIG. 3B and applied to the control.

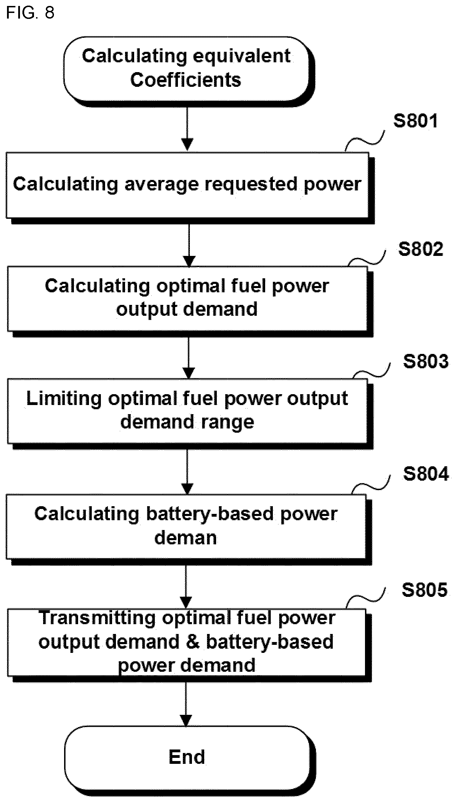

FIG. 8 is a flowchart of a method in which the control device (200) for a hybrid vehicle considering transient characteristics performs power control.

The power control method for a hybrid vehicle considering transient characteristics according to the present invention has already been described in detail with reference to the power control device (200) of the present invention in FIG. 7, so hereinafter, the process will be briefly summarized and described as a flowchart.

The average requested power calculation unit (210) calculates the average requested power ($\overline{P}$) from the input of the current requested power ($P$) received from the hybrid vehicle (S801).

The equivalent fuel consumption ($\dot{m}_{eq}$) is determined as the weighted sum of the instantaneous fuel consumption ($\dot{m}_f$) and battery power ($P_b$), and the optimal fuel power output command ( $P_f^*$ ) to be obtained is determined as the value that minimizes the average equivalent fuel consumption $\overline{\dot{m}}_{eq}$ shown in Equation (2a) of Expression 2 (Equation (2b)) (S802). At this time, the optimal fuel power output command ( $P_f^*$ ) to be determined becomes a function of the average requested power ($\overline{P}$), so the optimal fuel power output command ( $P_f^*$ ) value is eventually determined by the average requested power ($\overline{P}$) value calculated in step S801.

The instantaneous fuel consumption ($\dot{m}_f$) and battery power ($P_b$) can be expressed by modeled equations, an example of the modeled equations in the engine-electric hybrid powertrain (FIG. 3A) is shown in Expression 4, and an example of the modeled equations in the fuel cell-electric hybrid powertrain (FIG. 3B) is shown in Expression 7.

At this time, when Expression 4 or Expression 7 is applied to Equation (2a) of Expression 2, and accordingly, the value of the optimal fuel power output command ( $P_f^*$ ) (Equation (2b)) that minimizes $\bar{\dot{m}}_{eq}$ is obtained by Equation (2b) (S802), the resulting expression is as Expression 5 or Expression 8.

Therefore, in order to determine the optimal fuel power output command ( $P_f^*$ ) (Equation (2b)) value by Expression 5 in the engine-electric hybrid powertrain (FIG. 3A), the average values of the coefficients included in the models of the instantaneous fuel consumption ($\dot{m}_f$) and battery power ($P_b$) must be calculated. The average values of the coefficients included in the models of the instantaneous fuel consumption ($\dot{m}_f$) and battery power ($P_b$) are $\bar{r}_1$, $\bar{r}_2$, $\bar{q}_1$, $\bar{q}_2$, as described above, in the example of the engine-electric hybrid powertrain. In this case, the current fuel power source speed ($w_f$) and the current motor speed ($w_m$) are received as inputs.

In addition, as described above, in the fuel cell-electric hybrid powertrain (FIG. 3B), the coefficients $s_0$, $s_1$, $s_2$, $t_0$, $t_1$, $t_2$ in Expressions 7A and 7B are constants that do not change over time, respectively, so there is no need to apply average values to those coefficients. However, even if the average values are applied to each constant coefficient, the result is the same value, so it can be seen that the fuel power output equation of Expression 5 applied to the engine-electric hybrid powertrain and the fuel power output equation of Expression 8 applied to the fuel cell-electric powertrain have the same form.

If the determined optimal fuel power output command ( $P_f^*$ ) value (S802) is determined outside the allowable set (P) of the fuel power output, that is, if $P_f^*$ is less than or equal to the allowable minimum value ( $P_f^{min}$ ) of the fuel power output or greater than or equal to the allowable maximum value ( $P_f^{max}$ ), the $P_f^*$ can be limited as shown in Expression 6 (S803).

After that, the battery-based power command is calculated from the fuel power output command ( $P_f^*$ ) and the requested power (P) (S804). At this time, as described above, the battery-based power command determined and calculated here is the battery power command ( $P_b^*$ ) in the case of the fuel cell-electric hybrid powertrain of FIG. 3B, or the motor power command ( $P_m^*$ ) in the case of the engine-electric hybrid powertrain of FIG. 3A. The motor power command is calculated as and applied to the control.

The power control device (200) for a hybrid vehicle considering transient characteristics sends the fuel power output command ( $P_f^*$ ) and the battery-based power command determined in this way to the fuel power source control unit and the battery-based power control unit of the hybrid vehicle to control them.

In the engine-electric hybrid vehicle of FIG. 3A, the fuel power source, that is, the engine power is controlled by the fuel power output command ( $P_f^*$ ), and the motor power is controlled by the battery-based power command (S805). In addition, in the fuel cell-electric hybrid vehicle of FIG. 3B, the fuel power source, that is, the fuel cell power is controlled by the fuel power output command ( $P_f^*$ ), and the battery power is controlled by the battery-based power command (S805).

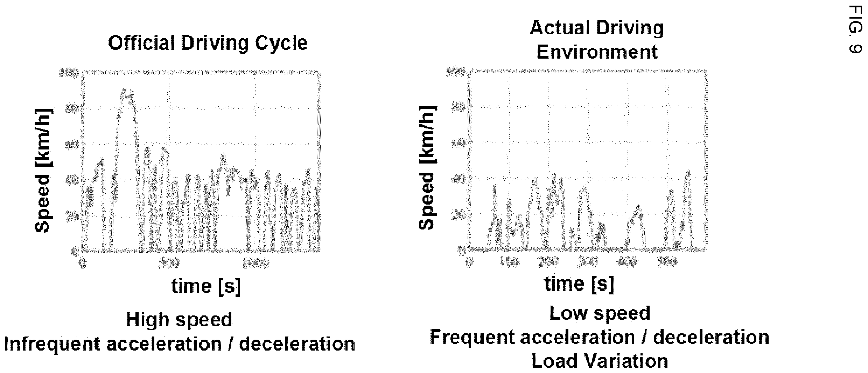

FIG. 9 is a diagram for comparing the official driving cycle and the actual driving environment of a commercial vehicle.

As shown in FIG. 9, commercial vehicles such as buses and trucks are operated under harsh conditions of (1) frequent stopping, acceleration, and deceleration, and (2) real-time load variation according to the change in cargo load, and this actual driving environment is significantly different from the official driving cycle (FTP75, etc.) for evaluating vehicle fuel efficiency performance.

The performance (fuel efficiency, carbon emissions) of commercial vehicles operating in such an environment with severe load variations is greatly affected by the transient operation of the fuel power source, and even if they are hybridized, performance optimization (minimization of carbon emissions) is difficult to achieve with the existing power control method that does not consider the transient characteristics of the fuel power source.

The power control method of the present invention, in which the reduction of transient operation of the fuel power source and the optimization of hybrid system performance are simultaneously performed, is particularly effective in commercial hybrid vehicles.

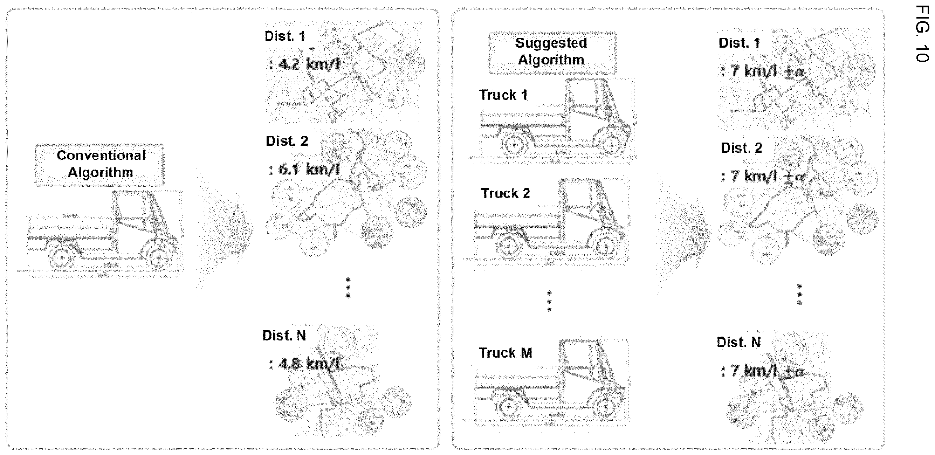

FIG. 10 shows the actual fuel efficiency and performance by driving environment according to the control method of the present invention in comparison with the results according to the conventional algorithm.

As shown in FIG. 10, according to the power control method for a hybrid vehicle considering transient characteristics of the present invention, it is possible to maximize the actual fuel efficiency and minimize the performance variation by driving environment.

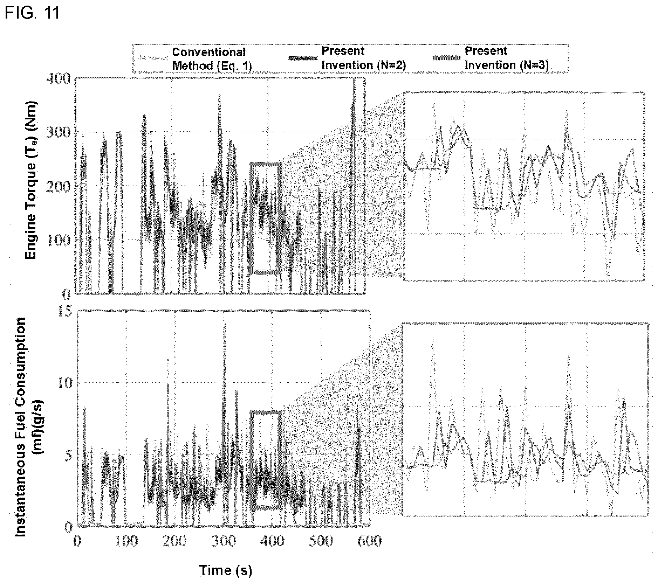

FIG. 11 shows the simulation results of engine torque and instantaneous fuel consumption of an engine-electric hybrid vehicle to which the control method of the present invention is applied.

Referring to the simulation results in FIG. 11, the conventional method generates a lot of transient operations in the engine torque ($T_e$), but the present invention greatly reduces the transient operation of the engine torque. In particular, as the number of time steps ($N$) used in the average calculation increases, the effect becomes greater. As a result, the instantaneous fuel consumption ($\dot{m}_f$) in the conventional invention includes a lot of transient components, resulting in additional fuel consumption more than necessary, while the transient components of fuel consumption are greatly reduced in the results of the present invention.

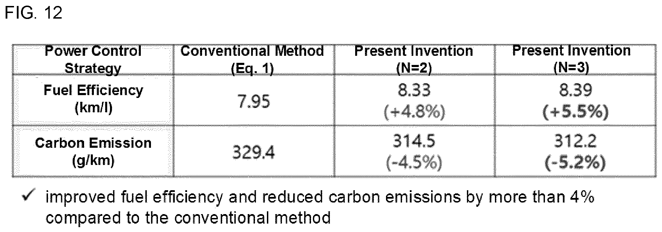

FIG. 12 shows the simulation results of fuel efficiency and carbon emissions of an engine-electric hybrid vehicle to which the control method of the present invention is applied.

The fuel efficiency and carbon emissions of each power control method derived as simulation results are summarized. The present invention improved fuel efficiency and reduced carbon emissions by more than 4% compared to the conventional method, and it can be seen that the effect increases as $N$ increases. Through this, it can be confirmed that the present invention is an effective power control strategy for reducing engine transient operation and optimizing the overall performance of the hybrid system.

## Claims

1. A power control method considering the transient characteristics of a hybrid vehicle, comprising:

   (a) receiving a current requested power value from the hybrid vehicle;
   (b) calculating an average requested power from the received plurality of requested power values;
   (c) calculating an optimal fuel power output command value that minimizes an average equivalent fuel consumption for the average requested power;
   (d) calculating a battery-based power command from the optimal fuel power output command calculated in step (c) and the requested power value; and
   (e) transmitting the optimal fuel power output command and the battery-based power command to a control system of the hybrid vehicle.

2. The power control method of claim 1, wherein

   the average equivalent fuel consumption is defined as a weighted sum of average fuel consumption and average battery power expressed as

$$\bar{m}_{eq}(P_f, P) = \bar{m}_f(P_f) + \lambda \bar{P}_b(P_f, P)$$

   where $\lambda$ is the equivalence factor.

3. The power control method of claim 1, further comprising, between step (c) and step (d), a step of:
   (c1) determining the fuel power output command as an allowable minimum value of the fuel power output if the fuel power output command value calculated in step (c) is less than or equal to the allowable minimum value of the fuel power output, determining the fuel power output command as an allowable maximum value of the fuel power output if the calculated fuel power output command value is greater than or equal to the allowable maximum value of the fuel power output, and determining the fuel power output command as the calculated fuel power output command value if the calculated fuel power output command value is between the allowable maximum value and the allowable minimum value of the fuel power output.

4. The power control method of claim 2, wherein,

when the hybrid vehicle uses an engine-electric hybrid powertrain,
the instantaneous fuel amount model equation is

$$\dot{m}_f(w_f, P_f) = q_0(w_f) + q_1(w_f)P_f + q_2(w_f)P_f^2$$

and the battery power model equation is

$$P_b(w_m, P_f, P) = r_0(w_m) + r_1(w_m)(P - P_f) + r_2(w_m)(P - P_f)^2$$

where the motor power ($P_m$) is determined by the difference between the requested power (P) and the fuel power output ($P_f$),
$w_m$ is the motor speed, $w_f$ is the engine speed,
$q_0$, $q_1$, $q_2$ are each a function of $w_f$, and $r_0$, $r_1$, $r_2$ are each a function of $w_m$.

5. The power control method of claim 4, wherein
the optimal fuel power output command is determined as

$$P_f^* = \frac{\lambda(\overline{r_1} + 2\overline{r_2 P}) - \overline{q_1}}{2(\lambda \overline{r_2} + \overline{q_2})}$$

.

6. The power control method of claim 4, wherein,

when the hybrid vehicle uses an engine-electric hybrid powertrain,
the battery-based power command calculated in step (d) is a motor power command.

7. The power control method of claim 2, wherein,

when the hybrid vehicle uses a fuel cell-electric hybrid powertrain,
the instantaneous fuel amount model equation is

$$\dot{m}_f(P_f) = s_0 + s_1 P_f + s_2 P_f^2$$

and the battery power model equation is

$$P_b(P_f, P) = l_0 + l_1(P - P_f) + l_2(P - P_f)^2$$

.

8. The power control method of claim 7, wherein
the optimal fuel power output command is determined as

$$P_f^* = \frac{\lambda(t_1 + 2t_2 \overline{P}) - s_1}{2(\lambda t_2 + s_2)}.$$

9. The power control method of claim 7, wherein,

when the hybrid vehicle uses a fuel cell-electric hybrid powertrain,
the battery-based power command calculated in step (d) is a battery power command.

10. An apparatus for performing power control considering the transient characteristics of a hybrid vehicle, comprising:

at least one processor; and
at least one memory storing computer-executable instructions,
wherein the computer-executable instructions stored in the at least one memory cause the at least one processor to perform:

(a) receiving a current requested power value from the hybrid vehicle;
(b) calculating an average requested power from the received plurality of requested power values;
(c) calculating an optimal fuel power output command value that minimizes an average equivalent fuel consumption for the average requested power;
(d) calculating a battery-based power command from the optimal fuel power output command calculated in step (c) and the requested power value; and
(e) transmitting the optimal fuel power output command and the battery-based power command to a control system of the hybrid vehicle.

11. A computer program for performing power control considering the transient characteristics of a hybrid vehicle, stored on a non-transitory storage medium, and comprising instructions that cause a processor to perform:

(a) receiving a current requested power value from the hybrid vehicle;
(b) calculating an average requested power from the received plurality of requested power values;
(c) calculating an optimal fuel power output command value that minimizes an average equivalent fuel consumption for the average requested power;
(d) calculating a battery-based power command from the optimal fuel power output command calculated in step (c) and the requested power value; and
(e) transmitting the optimal fuel power output command and the battery-based power command to a control system of the hybrid vehicle.

12. An apparatus for power control considering the transient characteristics of a hybrid vehicle, comprising:

an average requested power calculation unit that calculates an average requested power for the requested power value continuously received from a control unit of the hybrid vehicle;
a fuel power output calculation unit that calculates an optimal fuel power output command value that minimizes an average equivalent fuel consumption for the average requested power value;
a battery-based power calculation unit that calculates a battery-based power from the requested power value and the optimal fuel power output; and
a communication unit that continuously receives the requested power value from the control unit of the hybrid vehicle and transmits the optimal fuel power output command and the battery-based power command to the control system of the hybrid vehicle.

13. The apparatus of claim 12, wherein

the average equivalent fuel consumption is defined as a weighted sum of average fuel consumption and average battery power expressed as

$$\bar{m}_{eq}(P_f, P) = \bar{m}_f(P_f) + \lambda \bar{P}_b(P_f, P)$$

where $\lambda$ is the equivalence factor.

14. The apparatus of claim 12, wherein
the fuel power output calculation unit further includes a function of:

determining the fuel power output command as an allowable minimum value of the fuel power output if the calculated fuel power output command value is less than or equal to the allowable minimum value of the fuel power output,
determining the fuel power output command as an allowable maximum value of the fuel power output if the calculated fuel power output command value is greater than or equal to the allowable maximum value of the fuel power output, and
determining the fuel power output command as the calculated fuel power output command value if the calculated fuel power output command value is between the allowable maximum value and the allowable minimum value of the fuel power output.

15. The apparatus of claim 13, wherein,

when the hybrid vehicle uses an engine-electric hybrid powertrain,
the instantaneous fuel amount model equation is

$$\dot{m}_f(w_f, P_f) = q_0(w_f) + q_1(w_f)P_f + q_2(w_f)P_f^2$$

and the battery power model equation is

$$P_b(w_m, P_f, P) = r_0(w_m) + r_1(w_m)(P - P_f) + r_2(w_m)(P - P_f)^2$$

where the motor power ($P_m$) is determined by the difference between the requested power (P) and the fuel power output ($P_f$),
$w_m$ is the motor speed, $w_f$ is the engine speed,
$q_0$, $q_1$, $q_2$ are each a function of $w_f$, and $r_0$, $r_1$, $r_2$ are each a function of $w_m$.

16. The apparatus of claim 15, wherein
the optimal fuel power output command is determined as

$$P_f^* = \frac{\lambda(\bar{r_1} + 2\bar{r_2}P) - \bar{q_1}}{2(\lambda\bar{r_2} + \bar{q_2})}$$

.

17. The apparatus of claim 15, wherein,

when the hybrid vehicle uses an engine-electric hybrid powertrain,
the battery-based power command calculated by the battery-based power calculation unit is a motor power command.

18. The apparatus of claim 13, wherein,

when the hybrid vehicle uses a fuel cell-electric hybrid powertrain,
the instantaneous fuel amount model equation is

$$\dot{m}_f(P_f) = s_0 + s_1 P_f + s_2 P_f^2$$

and the battery power model equation is

$$P_b(P_f, P) = t_0 + t_1(P - P_f) + t_2(P - P_f)^2 .$$

19. The apparatus of claim 18, wherein
the optimal fuel power output command is determined as

$$P_f^* = \frac{\lambda(t_1 + 2t_2 \overline{P}) - s_1}{2(\lambda t_2 + s_2)} .$$

20. The apparatus of claim 18, wherein,

when the hybrid vehicle uses a fuel cell-electric hybrid powertrain,
the battery-based power command calculated by the battery-based power calculation unit is a battery power
command.

FIG. 1A

Engine Fuel Consumption Map

FIG. 1B

# Motor Efficiency Map

**Motor Torque [Nm]**

**Motor Speed [RPM]**

**Efficiency map [%]**

FIG. 2

**Starting**          **Power Change**          **Speed Shift**

**After DFCO**          **Smoke Limit**

$\dot{m}_{f \cdot meas}$ : measured value

$\dot{m}_{f \cdot SS}$ : calculated value of steady-state fuel map

$\omega_{eng}$ : engine speed

$T_{eng}$ : engine torque

FIG. 3A

FIG. 3B

FIG. 4

FIG. 5

FIG. 6

FIG. 7

$P_{m,f}^*$ : Power Demand
$w_{m,f}$ : Speed
$P$ : Requested Power
$\bar{P}$ : Average Requested Power

BMS : Battery management system
MCU : Motor control unit
ECU : Engine control unit
SOC : Battery state of charge

Power Control Unit considering transients

Power Control Unit

Average Requested Power Calc. Unit — 210

Fuel Power Output Calc. Unit — 220

Motor Power Calc. Unit — 230

200

Hybrid Vehicle

Requested power P

Pedals

present / time / $P$ / $\bar{P}$

Power Train

Fuel Tank / Engine / Motor / Inverter / Battery / Transmission / Wheel

BMS — SOC
MCU — $w_m$
ECU — $w_f$

$\bar{P}$ / $P$ / Pedal Map / $P_f^*$ / $P_m^*$

FIG. 8

Calculating equivalent Coefficients

Calculating average requested power — S801

Calculating optimal fuel power output demand — S802

Limiting optimal fuel power output demand range — S803

Calculating battery-based power deman — S804

Transmitting optimal fuel power output demand & battery-based power demand — S805

End

**Official Driving Cycle**

Speed [km/h]

time [s]

High speed
Infrequent acceleration / deceleration

**Actual Driving
Environment**

Speed [km/h]

time [s]

Low speed
Frequent acceleration / deceleration
Load Variation

FIG. 9

EP 4 424 564 A1

FIG. 10

FIG. 11

FIG. 12

| Power Control Strategy | Conventional Method (Eq. 1) | Present Invention (N=2) | Present Invention (N=3) |
|---|---|---|---|
| Fuel Efficiency (km/l) | 7.95 | 8.33 (+4.8%) | 8.39 (+5.5%) |
| Carbon Emission (g/km) | 329.4 | 314.5 (-4.5%) | 312.2 (-5.2%) |

✓ improved fuel efficiency and reduced carbon emissions by more than 4% compared to the conventional method

## INTERNATIONAL SEARCH REPORT

| International application No. |
| --- |
| **PCT/KR2022/016588** |

| **A.** | **CLASSIFICATION OF SUBJECT MATTER** |
| --- | --- |
| | **B60W 20/13**(2016.01)i; **B60W 30/184**(2012.01)i; **B60W 30/188**(2012.01)i; **B60W 50/00**(2006.01)i |

According to International Patent Classification (IPC) or to both national classification and IPC

| **B.** | **FIELDS SEARCHED** |
| --- | --- |

Minimum documentation searched (classification system followed by classification symbols)

B60W 20/13(2016.01); B60K 6/46(2007.10); B60W 10/08(2006.01); B60W 20/00(2006.01); B60W 20/10(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 차량(vehicle), 하이브리드(hybrid), 동력(power), 연료(fuel), 과도(transitional), 배터리(battery), 평균(average), 요구(demand), 최소(minimum), 등가(equivalent)

| **C.** | **DOCUMENTS CONSIDERED TO BE RELEVANT** | |
| --- | --- | --- |
| Category* | Citation of document, with indication, where appropriate, of the relevant passages | Relevant to claim No. |
| A | KR 10-1995173 B1 (HYUNDAI WIA CORPORATION) 02 July 2019 (2019-07-02)<br>See paragraphs [0043]-[0048] and figures 1 and 2. | 1-20 |
| A | KR 10-2012-0100372 A (IUCF-HYU (INDUSTRY-UNIVERSITY COOPERATION FOUNDATION HANYANG UNIVERSITY)) 12 September 2012 (2012-09-12)<br>See paragraph [0040] and figure 3. | 1-20 |
| A | KR 10-1816247 B1 (HYUNDAI AUTRON CO., LTD.) 08 January 2018 (2018-01-08)<br>See claim 1. | 1-20 |
| A | KR 10-1714215 B1 (HYUNDAI MOTOR COMPANY) 22 March 2017 (2017-03-22)<br>See claims 1 and 2. | 1-20 |
| A | US 2013-0173106 A1 (KONISHI, Yasuhiro) 04 July 2013 (2013-07-04)<br>See paragraphs [0085]-[0093] and figures 7 and 8. | 1-20 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 February 2023** | **27 February 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/016588**

| Patent document cited in search report | | | Publication date (day/month/year) | Patent family member(s) | | | Publication date (day/month/year) |
|---|---|---|---|---|---|---|---|
| KR | 10-1995173 | B1 | 02 July 2019 | None | | | |
| KR | 10-2012-0100372 | A | 12 September 2012 | KR | 10-1260030 | B1 | 06 May 2013 |
| KR | 10-1816247 | B1 | 08 January 2018 | None | | | |
| KR | 10-1714215 | B1 | 22 March 2017 | None | | | |
| US | 2013-0173106 | A1 | 04 July 2013 | BR | 112013001936 | A2 | 31 May 2016 |
| | | | | CN | 102971169 | A | 13 March 2013 |
| | | | | CN | 102971169 | B | 16 September 2015 |
| | | | | EP | 2599654 | A1 | 05 June 2013 |
| | | | | EP | 2599654 | A4 | 25 April 2018 |
| | | | | JP | 5477470 | B2 | 23 April 2014 |
| | | | | JP | WO2012-014845 | A1 | 12 September 2013 |
| | | | | KR | 10-1464895 | B1 | 24 November 2014 |
| | | | | KR | 10-2013-0045320 | A | 03 May 2013 |
| | | | | MX | 2013000276 | A | 11 February 2013 |
| | | | | MY | 165846 | A | 17 May 2018 |
| | | | | RU | 2013108241 | A | 10 September 2014 |
| | | | | RU | 2527607 | C1 | 10 September 2014 |
| | | | | US | 8612081 | B2 | 17 December 2013 |
| | | | | WO | 2012-014845 | A1 | 02 February 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101766092 B1
- US 20110166730 A1
- US 8473133 B2
- KR 101634489 B1